# EUROPEAN PATENT APPLICATION

(11) **EP 1 574 139 A1**
(43) Date of publication of application: **14.09.2005**
(21) Application number: 05075581.8
(22) Date of filing: 09.03.2005
(51) Int. Cl.: A23L 1/164, A23L 1/217, A23L 1/2165, A23L 1/216

(54) **Crispy snack food product in cluster-shape and process for preparing the same**

(30) Priority: 12.03.2004 EP 04075806
(71) Applicant: UNILEVER N.V., 3013 AL Rotterdam (NL); UNILEVER PLC, London EC4P 4BQ (GB)
(72) Inventor: Bösch, Thomas H. Unilever Bestfoods Deuts. GmbH, 74074 Heilbronn (DE); Detje, Peter E.H. Unilever Bestfoods Deuts. GmbH, 74074 Heilbronn (DE); Lung, Oliver Unilever Bestfoods Deuts. GmbH, 74074 Heilbronn (DE); Pfeilstetter, J. Unilever Bestfoods Deuts. GmbH, 74074 Heilbronn (DE)
(74) Representative: Wurfbain, Gilles L.

(57) **Abstract**

A crispy snack food on the basis of of potato, corn and/or rice, said food comprising dried clusters of thin particulates or sheet fragments of dough.

## Description

### Field of the invention

The present invention relates to a low-fat low-moisture crispy (savoury) snack food product on the basis of matter from potatoes and/or corn and/or rice, preferably to a large extent from potato.

### Background of the invention

Snack food such as potato crisps (or chips, as they are called in some countries) enjoy wide popularity for a long time. Usually portions of 50-500 g are packed in hermetically sealed bags, and eaten (usually without heating) as a snack product, optionally with added seasoning or dip. Conventionally, such crisps are prepared by thinly slicing potatoes, which slices are deep-fried in hot oil (temperatures 160-220°C), and optionally salted and/or flavoured. Good quality crisps are dry and crispy. Other variants are made out of potato starch and/or corn starch. Also, using e.g. potato and/or corn starch other variants in shape have been designed, but most of those dry, savoury starch-based snack products have in common that they contain a fairly large amount (up to 35% weight) of oil or fat, due to the manner of preparation. Examples of such products are described in e.g. US 4,973,481, US, 3,835,222 and US 3,997,684.

The last few decades consumers have become increasingly health conscious, and there is a demand for foodstuffs similar in performance of conventional foodstuffs, but having a reduced level of fat. Originally, it has been preferred that all of flavour, flavour delivery, texture, structure and appearance should mimic as closely as possible the full-fat original products. Thus, next to e.g. low fat margarine, low fat ice cream, low fat crisps have been developed.

Examples of processes that can be used to make such low fat crisps or crisp-like product are disclosed in e.g. US 4,283,425. This document discloses a process for making potato chips having less than 10% fat (i.e. reduced fat), by a process which does not need deep-frying. The process comprises the steps of slicing potatoes, coat the slices with globular protein, followed by microwave heating to dry the particles and develop flavour and structure of fat fried potato chips.

US 5,690,982 discloses a process for preparing a low fat chip-like baked good on the basis of a starch-containing ingredient. The process involves preparing a dough from a starch-rich ingredient such as potato flour or flakes or corn flour with water, by mixing and heating (e.g. in an extruder). The dough so obtained is sheeted or rolled in thin layers, which layers are laminated (i.e. several layers stacked on top of eachother), the laminate is rolled to a thin, laminated layer, and cut into pieces and baked. The baking is done in a conventional band oven having several temperature zones of about 163-343°C (325-650F). The fast application of high heat leads to rapid formation of steam within the pieces. Said steam and rolled laminate structure gives rise to blister formation as the pieces are being baked, thus leading to products which have a 'blistered cracker' appearance. It is believed these blisters give the product the desired crispiness, usually associated with full fat products.

US 5,500,240 discloses a process for making blistered, chip-like products without using a frying step. The process involves forming a dough of 30-50% moisture by mixing wheat flour, a non-gluten starchy material such as potato flakes, water and pre-gelatinised waxy starch followed by sheeting the dough (optionally followed by laminating upon itself and reduced in thickness to form a thin sheet) and cutting to pieces, whereafter the pieces are heated in a band-oven at temperatures between 104.4-343°C (220-650F) to reduce the moisture content

below 4% (actual temperatures used 310-330F = 154-165°C).

GB 2290216 discloses a process for making potato chips, which process involves the steps of making a dough of dried potatoes (e.g. flakes and granules) and cooked potatoes and 0.1-30% fat and some water, sheet the dough (0.5-2 mm thickness), form pieces by cutting, stamping or punching to the desired flat structure and bake the products at temperatures of allegedly 100-300°C (190 and 270°C being actually used) to expand the chips.

US 2003/0134010 discloses breakfast cereal pieces that have a pastry-like texture. The products are cooked cereal-based snacks that provide a novel eating sensation. The products are multilayered pieces of horizontal and parallel layers with interstitial voids. Such products are prepared by forming thin layers of cooked cereal dough as sheets or flakes, compressing the thin cereal dough layer, forming individual pieces, followed by drying or toasting.

The products produced by the methods of the above references are not always satisfactory. It was found that there is a need for reduced fat (i.e. 20% or less, preferably 10% or less, based on the final product) crispy, savoury snack food product that can be alternatives to the reduced fat chip or crisp lookalikes made by the processes as described above. Such crispy snack food products are intended e.g. to be consumed at similar moments as conventional crisps, yet having a reduced fat content and good quality. Additionally, there is a continuous demand in the snack food area for novel shapes and appearances. Preferably, the products comprise starch or a starchy matter, and more preferably comprise potato ingredients.

### Summary of the invention

It was found that the above objectives, may (at least in part) be met by a process for preparing a snack food product, which process involves the steps of:
- preparing a dough comprising 30-100% (weight % of the total dough) matter from potatoes and/or corn and/or rice, the dough having a moisture content of 35-70% (weight % of the total dough) and a protein content of less than 3% (weight % of the total dough),
- forming the dough into sheet fragments having a thickness of 0.05-1 mm (preferably 0.05-0.6 mm, more preferably 0.1-0.6 mm) by sheet-forming means, optionally followed by breaking-up the sheets into sheet fragments,
- assembling 2-50 (preferably 3-25) of said sheet fragments into clusters of sheet fragments and simultaneously and/or subsequently drying the clusters to a moisture content of 0-8% (preferably 0-6% wt), (of the dried products),
- packing the dried clusters.

In the above, it is important that the assembling of the sheet fragments leads to more or less airy clusters: i.e. clusters in which parts of separate sheet fragments can be identified. The sheet fragments that are assembled preferably have (apart from the thickness mentioned) a size of 0.5-30 cm². Such can be achieved e.g. by sheeting in such a way that sheet fragments of the required thickness and size are directly obtained, or by making a large sheet of the required thickness and breaking-up the large sheet into smaller fragments as required. Such are simple sheet fragments. An alternative to obtain the clusters according to the invention is to (preferably loosely) laminating the sheet (the sheet having the thickness as specified above) (in a regular or irregular fashion) into a laminate of 2-30 mm thick, followed by breaking-up said laminated sheet into (laminated) sheet fragments, wherein the laminates are not reduced in thickness to thin laminates (e.g. by pressing or rolling) following the laminating step, contrary to the prior art. Said (laminated) sheet fragments may then be assembled by 2-50 fragments into clusters, etcetera, in a similar fashion as the simple sheet fragments, as set out above. Thus, the forming as above specified may optionally comprise a step of loosely laminating the thin sheet. Also, the clusters may be obtained by intermediate techniques: preparing clusters from loosely laminated sheet fragments together with simple sheet fragments. The (laminated or non-laminated) sheet fragments may be regular or irregular in shape, and so are the clusters obtained.

It was found, that by using the process as set out above, the shape is obtained prior to drying, rather than by drying which often leads to (here: undesired) blister formation. It was also found that the clusters of (parts of) sheets are attractive shapes, and the product so prepared surprisingly also had a desired crispiness. It was found the drying can be effected at temperatures below 100°C, e.g. above 60°C and below 100°C, or 75-100°C, but the products so obtained may have a bit of a bleak color: drying at slightly higher temperature (e.g. up to 120 or up to 140 or even up to 200°C) for at least part of the drying process may provide clusters having a more desired golden/yellow color. It is believed such lower temperatures may lead to less formation of acrylamides, which are known to form during heating potato ingredients at high temperatures, e.g. frying. It may also be preferred to firstly dry at e.g. 60-120°C, preferably below 100°C and above 60°C to a moisture content of e.g. 0-8%, followed by subjecting to higher temperatures (e.g. 90-200°C, preferably 90-160°C, or 90-140°C) to form (more) color and/or flavour. It is believed that by such first heating stage to dry, the structures are firmly set (e.g. without blister formation) and the second aims for color and/or flavour.

The forming of the dough into sheets of 0.05-1 mm may be achieved by any suitable conventional sheet-forming means. Thus, the sheet-forming means may comprise e.g. extrusion, pressing through a die, or by rolling of the dough into sheets using one or more rollers. It was found that pressures on the dough upon forming should preferably not be too high, in order to avoid the formation of too much free starch in the dough, resulting in e.g. a too firm or hard texture. Sheet-forming means comprising (a pair of) rollers is most preferred. This is preferably followed by breaking-up the sheets into fragments, and assembling 2-30 (preferably 3-15) of said sheet fragments into clusters of sheet fragments of 0.5-16g, preferably 2-10g (weight prior to drying).

The product according to the invention (and as can be obtained using the process as described above) is a crispy or brittle (savoury) snack food product having a fat content of 0-20% (preferably 0.1-20%, more preferably 0.1-10% wt, most preferably 0.1-5% wt, based on the dried product) and a moisture content of 0-8% (preferably 1-5% wt, based on the dry product) comprising at 40% (preferably at least 60%) by weight of dry components of one or more of potato, corn or rice, which snack food product is shelf stable for at least 1 month, wherein the food product comprises a cluster of sheeted material. The products according to the invention preferably contains substantially no blisters (that is: blisters easily visible by the naked eye).

### Detailed description of the invention

As mentioned above, the amount of protein (e.g. gluten) should be below 3% by weight of the complete dough mixture, preferably such level of protein is below 2%, more preferably below 1 %. Reason is that too much protein can be detrimental to obtaining the desired structure (shape), texture (mouthfeel) and colour. Too much protein for example will make the product too hard for the desired purpose, and the colour too dark. For the above reasons, it is preferred that the dough in the present case is not a cereal-based dough, as cereals comprise a considerable amount of protein (in the form of gluten).

In the process as set out above, it is possible to break the sheet as it is, and cluster it to the desired shape. It is also possible to laminate the formed sheets to e.g. 2-10 layers, prior to breaking it up into particles and clustering the particles. The advantage is that larger clusters are easily obtained. Such is conveniently achieved by receiving the sheeted dough or strands on a moving belt, which belt has a lower speed than the surface speed of the rollers (then also followed by breaking up into fragments and assembling into clusters). The starch in the shaped dough can usually be sufficient to "glue" the particulates together into clusters, and hold them together until the drying stage.

As mentioned before, the dough should comprise 30-100% matter from potatoes, and/or corn and/or rice. The use of matter from potatoes, in particular from fresh potatoes over e.g. corn, or rice matter in the process according to the invention has an advantage regarding the taste and consumer appeal, in particular if potatoes are chosen that have a pleasant, non-bitter potato taste, and preferably have a starch content of 12-20%, more preferably 13-18%. Thus, the dough in the process and particles according to the invention preferably comprises 30-100% (weight % of the total dough) matter from potatoes, more preferably mashed potatoes and/or potato starch and/or potato flakes and/or potato granules.

It was found that for well shaping the dough should have a moisture content of 35-70% wt, preferably of 45-65% wt, more preferably 50-65% wt. If the dough is too wet, the dough tends to stick to the rollers, if the dough is too dry, the formed dough will easily break up. Ensuring the dough has the proper moisture content can be achieved by balancing and mixing of wet dough components (e.g. mashed potatoes) with dry dough components (e.g. potato flakes or granules, or starch or dry components from a non-potato origin, e.g. from corn or rice), or by adding moisture or removing moisture (e.g. from mashed potatoes) by known moisture-reducing steps such as partial drying. If a dough contains some oil or fat, the moisture content can be more on the lower side, and still yield a good, machinable dough. In order to obtain a suitable dough and to obtain an attractive taste, the dough is preferably prepared using mashed potatoes from fresh potatoes, e.g. as exemplified below. A potato mash so prepared usually has a moisture content of about 80%. This is too wet for preparing a dough suitable in the present invention. Hence, the moisture content of the dough has to be reduced, e.g. by partial drying or mixing it with dry potato-derived products such as potato flakes, potato granules or potato starch. Alternatively, other starchy matter may be added to the dough, e.g. to partially replace the potato flakes, granules or starch, e.g. from corn or rice, in an amount of 0-30% (based on the dough). Preferably, to conveniently obtain a desired moisture content, the mashed potatoes are mixed with dry potato starch and/or potato flakes and/or potato granules, e.g. in a weight ratio fresh potato mash : starch/flakes/granules is between 1 : 2 and 1 : 0.1. The dough comprises preferably at least 20% wt, more preferably at least 30%, most preferably more than 50% by weight of mashed fresh potatoes, e.g. up to 99%, preferably up to 75%. Such mashed potatoes may be obtained by processes as are known in the art. It is preferred that the potatoes are only partially cooked (contrary to the fully cooking as is conventionally done for preparing a mashed potato for direct consumption), such as:
- peeling raw potatoes,
- dividing the potatoes into smaller particles, e.g. slices of 2-10 mm,
- blanch (e.g. 8-15 minutes), steam or boil (but preferably only partially cook) the potato particles at 85-95°C (the actual boiling, steaming or blanching time being dependent e.g. on the size of the potato particles and temperature, as the person of average skill in the art can easily determine),
- grate or mash the potatoes by using suitable grating, mashing or mixing equipment (e.g. by passing through 2-4mm slits).

Potato granules are usually dehydrated single cells or aggregates of cells of the potato tuber dried to about 6-7% moisture. They are usually produced by the so called "add-back" process, in which cooked potatoes are reduced in moisture content by adding back enough previously dried granules to give a "moist mix" which after holding can be satisfactorily granulated to a fine powder. As further ingredients granules may contain emulsifier, anti-oxidants, colorants and/or flavours. Potato flakes are usually dehydrated mashed potatoes which can be made by applying cooked mashed potatoes to the surface of a single drum dryer fitted with applicator rolls, drying the deposited layer of potato solids rapidly to the desired final moisture content (6-9%) and breaking the sheet of dehydrated potato solids into a suitable size for packaging. The standard procedure includes a blanching and cooling step before cooking, these two steps are missing in the so called "low-leach" process. Flakes produced by the "low-leach process are often used in the snack industry because of the higher free starch content. Commercial flakes vary in flake size (10-60 mesh). As further ingredients flakes may contain emulsifier, anti-oxidants, colorants and/or flavours. All commercial flakes and granules are in principle suitable in the process according to the present invention. Potato starches can be native or pregelatinized potato starch as well as physically or chemically treated starch. Commercial starches vary in residual water content (6-20%).

Instead of or in addition to potato flakes/granules/starch or rice or corn starch it may also be preferred to include vegetable matter other than of potato, rice or corn (preferably in the form of dry powder or vegetable puree), such as e.g. herbs, spices, (raw, roasted, fried or sautéed) onion, dried tomato powder or puree, red bell pepper powder or puree. This can have an advantageous effect on the taste and/or texture, and provides new taste opportunities. Such matter is suitable included in an amount of 0.1-30%, and can be included into the dough prior to forming. As the present invention preferably relates to a savoury snack food, it can be preferred that 0.1-5% salt is included into the dough prior to forming. Other ingredients that can be included are dairy ingredients such as cheese, caseinate, whey powder, dry milk powder, cream powder, etcetera, e.g. in an amount of 0.1-15%. Also flavourings, natural or artificial can be included, as well as MSG, ribotides, and/or organic acids. Optionally, 0.1-10% wt of sugar or other sweetener may be included into the dough. All components mentioned in this paragraph are in amounts as taken on the fresh dough, and they may be incorporated into the dough. However, part or all of such additional components may also be added after the shaping, e.g. prior to, during or after the drying, optionally using a carrier, dispersing or sticking agent, such as water, oil, an emulsion, or other. A browning or seasoning agent may be sprayed onto the particles e.g. using such dispersing agent.

Although the invention relates to snack food products or particles of clustered dough sheet being low in fat, some oil or fat may be included in the formulation, so as influence the texture of the dough and handling of it, as well as to influence the crispiness and firmness of the resulting products, and additionally to enhance the flavour or flavour delivery and/or to act as medium to provide flavours or herbs or spices to the snack particles. The oil or fat may be included into the dough and/or sprayed onto the products at any stage after forming the sheet. The amount of oil/fat in this is preferably 0-20% (more preferably 0.1-20%, still more preferably 0.1-10% wt, most preferably 0.1-5% wt), based on the dried product. The oil/fat may be sprayed onto the sheet as oil or fat, or as an emulsion with an aqueous liquid.

Herbs, salt, spices, seasoning or flavours may also be sprayed onto the sheeted dough or the formed snack particles or already dried snack particles as a solution/dispersion in water, oil or an oil and water containing emulsion.

The invention further extents to the products obtainable by the above process. As such products are dried, the weight percentage of various preferred ingredients is considerably higher in the dried particle than in the dough recipe, as set out above (e.g. going from a moisture content of about 50% in the dough to a moisture content of about 0-1 % in the final product will almost double the amount of the respective other ingredients). Thus, (weight percentages based on the final, dried products) the invention further relates to a crispy or brittle (savoury) snack food product having a fat content of 0-20% (preferably 0.1-20%, more preferably 0.1-10% wt, most preferably 0.1-5% wt) and a moisture content of 0-8% (preferably 0.5-6%, more preferably 1-5% wt) comprising at least 40% (preferably at least 60%) by weight of dry components of one or more of potato, corn or rice, which food product is shelf stable for at least 1 month, characterised in that the snack food product comprises clusters of assembled sheeted or die-pressed material. The weight of the dried clusters is preferably 0.1-8 g, more preferably 0.3-5 g, most preferably 0.5-3 g. Said clusters preferably are irregular in shape and preferably do not containing blisters (as visible to the naked eye). It is preferred that in the clusters parts of individival sheets can be identified from which the clusters are prepared (partly as it is pleaseing to the eye, partly as such products are believed to be more crispy. It is preferred that the parts of individiual sheets have a thickness of 0.05-1 mm, preferably 0.06-0.6 mm, more preferably 0.1-0.6 mm. As the products need to be suitable as a snack food, they have a minimum size (smallest dimension of at least 90% by weight of the particles) of 0.5 cm, preferably of 1 cm.

It is preferred that the dried particles or products according to the invention comprise 0.2-10% salt (weight percentages based on the final, dried particles or products). Optionally (e.g. depending upon the taste desired), the products may also comprise (in weight percentages based on the final, dried products) 0.2-60% of herbs, spices, flavourings or vegetable matter other than of potato, rice, corn, or wheat and/or 0.2-30% of dairy products. All flavours or seasonings suitable to e.g. crisps or chips may be included, as well as a browning composition. Such components (flavourings, seasonings, salt, herbs, spices, dairy products etcetera can suitably be included in the dough, e.g. prior to forming into thin sheets.

### EXAMPLES

### Example 1.

Fresh potatoes (variety Karlena, starch content about 14-18%) were peeled and sliced into a thickness of approx. 5 mm. The slices were blanched in water at about 90°C for 10 minutes. The blanched slices were grated (slit 3 mm) to obtain a coarse mash, having a moisture content of about 80%. A mixture of dry ingredients was prepared containing 45.5% (wt) dry potato flakes (Pfanni, standard industry quality) 45.5% dry potato granules, 7.5% palm oil, 1.5% salt. This dry mix was added to the blanched, grated fresh potatoes such that the moisture content of the resulting mixture dry ingredients + mashed fresh potatoes was about 50-60% (relating to about 66% fresh potatoes and 34% dry ingredients). This mixture was mixed in a planetary mixer for 3 minutes, thus obtaining a potato 'dough'.

This dough was subjected to twin-rollers to get sheets, the distance between the rollers being 0.35 mm. The sheets were fed onto a moving belt, the speed of the belt being about one third of the rollers, so that the sheet coming off the rollers is folded or laminated loosely, to have approx. 3 layers.

The loosely laminated sheeted material was disrupted (or broken) up in irregular pieces of a few cm size and said irregular pieces were clustered together for form clusters or assemblies of approx. 2-4 cm. These clusters were dried in an oven for approx. two and a half hours, the air having a temperature of approx. 95°C. The resulting products had a moisture content of approx. 2 % (wt), and were crispy and had no blistered appearance, and a neutral, light potato flavour. The product could be flavoured by afterwards spraying onto it a suspension of spices in either oil, water or an emulsion.

### Example 2.

Provencale-herb-flavoured crispy snacks were prepared using the process of example 1, with the following ingredients (the percentage being weight percentage in the final dough mixture prior to sheeting), all included in the dough:

| Example 2 (provencale) | Dough composition % (wt) |
|---|---|
| potato flakes | 14.8 |
| olive oil | 2.4 |
| salt | 0.5 |
| sugar | 0.1 |
| potato granules | 14.8 |
| herb mix provencale, as emulsion in fat (38% fat) | 1.6 |
| fresh potato mash | 65.8 |
| | 100 |

### Example 3.

Dairy-tomato flavoured crispy snacks were prepared using the process of example 1, with the following ingredients (the percentage being weight percentage in the final dough mixture prior to sheeting), all included in the dough:

| Example 3 (dairy-tomato) | Dough composition % (wt) |
|---|---|
| potato flakes | 11.4 |
| palm oil | 1.8 |
| salt | 0.4 |
| sugar | 0.1 |
| potato granules | 11.4 |
| Mozzarella powder | 2.5 |
| basil (dry powder) | 0.1 |
| tomato puree | 6.3 |
| fresh potato mash | 66.0 |
| | 100 |

### Example 4.

Bell-pepper-flavoured crispy snacks were prepared using the process of example 1, with the following ingredients (the percentage being weight percentage in the final dough mixture prior to sheeting), all included in the dough:

| Example 4 (red bell pepper) | Dough composition % (wt) |
|---|---|
| potato flakes | 12.3 |
| palm oil | 2.0 |
| salt | 0.4 |
| sugar | 0.1 |
| potato granules | 12.3 |
| red bell pepper puree | 5.4 |
| herb mix provencale, as emulsion in fat (38% fat) | 1.4 |
| fresh potato mash | 66.1 |
| | 100 |

### Example 5.

Savoury crispy snacks were prepared using the process of example 1, with the following ingredients (the percentage being weight percentage in the final dough mixture prior to sheeting), all included in the dough:

| Example 5 (native starch) | Dough composition % (wt) |
|---|---|
| potato flakes | 10.1 |
| palm oil | 2.9 |
| salt | 0.6 |
| sugar | 0.1 |
| potato granules | 18.1 |
| native potato starch | 2.0 |
| fresh potato mash | 66.2 |
| | 100 |

### Example 6.

Crispy snacks were prepared using the process of example 1, with the following ingredients (the percentage being weight percentage in the final dough mixture prior to sheeting), all included in the dough:

| Example 6 (gelatinised starch) | Dough composition I % (wt) |
|---|---|
| potato flakes | 10.2 |
| palm oil | 2.9 |
| salt | 0.6 |
| sugar | 0.1 |
| potato granules | 18.2 |
| gelatinised potato starch | 1.2 |
| fresh potato mash | 66.8 |
| | 100 |

### Example 7.

Potato/wheat starch-containing crispy snacks were prepared using the process of example 1, with the following ingredients (the percentage being weight percentage in the final dough mixture prior to sheeting), all included in the dough:

| Example 7 (potato wheat starch) | Dough composition % (wt) |
|---|---|
| potato flakes | 10.2 |
| palm oil | 2.9 |
| salt | 0.6 |
| sugar | 0.1 |
| potato granules | 18.3 |
| native wheat starch | 1.2 |
| fresh potato mash | 66.7 |
| | 100 |

### Example 8.

Crispy snacks were prepared using the process of example 1, with the following ingredients (the percentage being weight percentage in the final dough mixture prior to sheeting):

| Example 8 (no fat, bland flavour) | Dough composition % (wt) |
|---|---|
| potato flakes | 16.3 |
| salt | 0.6 |
| potato granules | 16.3 |
| fresh potato mash | 66.8 |
| | 100 |

The resulting product was slightly harder than examples 1-7 and 9.

### Example 9.

Crispy snacks were prepared using the process of example 1, with the following ingredients (the percentage being weight percentage in the final dough mixture prior to sheeting):

| Example 9 (glucose syrup) | Dough composition % (wt) |
|---|---|
| potato flakes | 14.4 |
| palm oil | 2.3 |
| salt | 0.5 |
| glucose syrup | 1.9 |
| potato granules | 14.3 |
| fresh potato mash | 66.6 |
| | 100 |

## Claims

1. Process for preparing a snack food product, which process involves the steps of:
- preparing a dough comprising 30-100% (weight % of the total dough) matter from potatoes and/or corn and/or rice, the dough having a moisture content of 35-70% (weight % of the total dough) and a protein content of less than 3% (weight % of the total dough),
- forming the dough into sheet fragments having a thickness of 0.05-1 mm by sheet-forming means, optionally followed by breaking-up the sheets into sheet fragments
- assembling 2-50 (preferably 3-25) of said sheet fragments into clusters of sheet fragments and simultaneously and/or subsequently drying the clusters to a moisture content of 0-8% (preferably 0-6% wt), (of the dried products),
- packing the dried clusters.

2. Process according to claim 1, wherein the dough comprises 30-100% (weight % of the total dough) mashed potatoes and/or potato starch and/or potato flakes and/or potato granules.

3. Process according to claim 1-2, wherein the sheet-forming means comprises a pair of rollers.

4. Process according to claim 1-3, wherein the clusters of separate sheets or parts of sheets have a weight of 0.5-16g, preferably 2-10g (weight prior to drying).

5. Process according to claim 1-4, wherein the sheets after forming and prior to assembling into clusters and drying have a thickness of 0.05-0.6 mm, preferably 0.1-0.6 mm.

6. Process according to claim 1-5, wherein the assembling of the dough sheets is executed in a regular or irregular fashion.

7. Snack food product having an oil/fat content of 0-20%, preferably 0.1-20% (wt % based on the dried product) and a moisture content of 0-8% (preferably 1-5% wt) comprising at least 40% (preferably at least 60%) by weight of dry components of one or more of potato, corn or rice, which food product is shelf stable for at least 1 month, and wherein said food product comprises a cluster of sheeted material.

8. Product according to claim 7, wherein the cluster is irregular in shape.

9. Product according to claim 7-8, wherein at least 90% by weight of the particles have a minimum dimension of at least 0.5 cm, preferably of 1 cm.

10. Product according to claim 7-9, wherein the weight of the cluster is 0.1-8 g.
